# EUROPEAN PATENT APPLICATION

(11) **EP 4 563 645 A1**
(43) Date of publication of application: **04.06.2025**
(21) Application number: 23846447.3
(22) Date of filing: 24.07.2023
(51) Int. Cl.: C08L 27/12, C08K 3/22, C08K 3/34, C08K 5/14, C08L 27/16, C08L 27/18, F01N 3/08

(54) **CROSSLINKABLE COMPOSITION AND MOLDED ARTICLE**

(30) Priority: 25.07.2022 JP 2022118090
(71) Applicant: DAIKIN INDUSTRIES, LTD., Osaka-shi, Osaka 530-0001 (JP)
(72) Inventor: KAWASAKI, Kazuyoshi, Osaka-Shi, Osaka 530-0001 (JP); TAKEMURA, Kouhei, Osaka-Shi, Osaka 530-0001 (JP)
(74) Representative: Hoffmann Eitle
(86) International application number: PCT/JP2023/026981
(87) International publication number: WO 2024/024717

(57) **Abstract**

Provided is a crosslinkable composition which is used to form a formed article that comes into contact with one or both of an ammonia and a urea, the crosslinkable composition containing a fluoroelastomer and at least one additive selected from the group consisting of aluminum silicate, magnesium silicate, aluminum oxide, zirconium oxide, and magnesium aluminometasilicate.

## Description

### TECHNICAL FIELD

The present disclosure relates to a crosslinkable composition and a formed article.

### BACKGROUND ART

Patent Document 1 describes a component for contacting ammonia and/or urea having a surface that is in contact with at least one of urea and ammonia, wherein the surface contains a fluoroelastomer composition containing a fluoropolymer and a hydrotalcite compound.

Patent Document 2 describes a part for urea SCR systems, which is obtained by crosslinking a crosslinkable composition containing a fluorine-containing polymer with a glass transition temperature of 25°C or less and a cross-linking agent, wherein the fluorine-containing polymer is a copolymer consisting of vinylidene fluoride and a fluorine-containing monomer (1) represented by the following general formula (1):

CH₂=CFRf (1)

wherein Rf is a linear or branched fluoroalkyl group having 1 to 12 carbon atoms.

Patent Document 3 describes a fluoroelastomer composition which contains a fluoroelastomer and at least one selected from the group consisting of aluminum silicate and synthetic magnesium silicate.

Patent Document 4 describes a crosslinked fluorine-containing elastomer formed article obtained by crosslinking a crosslinkable fluorine-containing elastomer composition containing 0.5 to 100 parts by weight of an inorganic filler with a primary average particle size of 5 µm or less based on 100 parts by weight of a fluorine-containing elastomer component, wherein the inorganic filler includes at least one inorganic filler containing aluminum.

### RELATED ART

### PATENT DOCUMENTS

Patent Document 1: Japanese Translation of PCT International Application Publication No. 2017-500397
Patent Document 2: Japanese Patent Laid-Open No. 2016-131953
Patent Document 3: Japanese Patent Laid-Open No. 2019-094370
Patent Document 4: International Publication No. 2003/051987

### SUMMARY OF THE INVENTION

### PROBLEM TO BE SOLVED BY THE INVENTION

An object of the present disclosure is to provide a crosslinkable composition that allows to obtain a formed article that comes into contact with one or both of an ammonia and a urea and that has excellent urea water resistance and ammonia water resistance, as well as excellent acid resistance.

### MEANS FOR SOLVING THE PROBLEM

According to the present disclosure, there is provided a crosslinkable composition which is used to form a formed article that comes into contact with one or both of an ammonia and a urea, the crosslinkable composition containing a fluoroelastomer and at least one additive selected from the group consisting of an aluminum silicate, a magnesium silicate, an aluminum oxide, a zirconium oxide, and a magnesium aluminometasilicate.

### EFFECTS OF INVENTION

According to the present disclosure, it is possible to provide a crosslinkable composition that allows to obtain a formed article that comes into contact with one or both of an ammonia and a urea and that has excellent urea water resistance and ammonia water resistance, as well as excellent acid resistance.

### BRIEF DESCRIPTION OF DRAWING

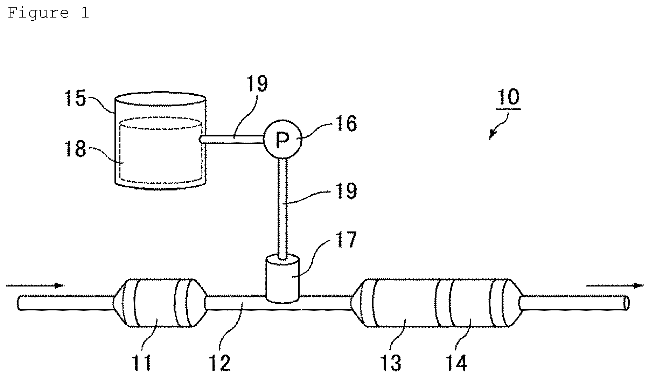

Figure 1 is a schematic diagram showing an example of a urea SCR system.

### DESCRIPTION OF EMBODIMENTS

Hereinafter, specific embodiments of the present disclosure will now be described in detail, but the present disclosure is not limited to the following embodiments.

Patent Document 1 proposes a fluoroelastomer composition containing a fluoropolymer and a hydrotalcite compound as a fluoroelastomer composition that is resistant even when in contact with urea and/or ammonia.

It was found that compounding a hydrotalcite compound with a fluoroelastomer deteriorated the acid resistance of the resulting formed article. The formed article that comes into contact with one or both of ammonia and urea can be used, for example, as a formed article used in manufacturing systems that utilize ammonia or urea (e.g., reaction containers, tubes, and sealing materials). In manufacturing systems that utilize ammonia or urea, ammonia may be generated by heating urea, or chemicals may be converted from ammonia or urea to acid. Conventional formed articles with poor acid resistance cannot be used in parts of the manufacturing system where the chemicals used contain acid or where the chemicals used can be converted to acid, even if they have excellent urea water resistance and ammonia water resistance, and it becomes necessary to use formed articles formed from different materials for these parts. This not only increases costs, but also increases the burden of building and managing the manufacturing system. Therefore, there is a need for a crosslinkable composition that allows to obtain a formed article having excellent urea water resistance and ammonia water resistance, as well as excellent acid resistance, the crosslinkable composition being used to form a formed article that comes into contact with one or both of ammonia and urea.

The crosslinkable composition of the present disclosure contains a fluoroelastomer and at least one additive selected from the group consisting of an aluminum silicate, a magnesium silicate, an aluminum oxide, a zirconium oxide, and a magnesium aluminometasilicate. As the crosslinkable composition of the present disclosure is made by compounding these additives with a fluoroelastomer, crosslinking the crosslinkable composition of the present disclosure to form a formed article allows to obtain a formed article having excellent urea water resistance and ammonia water resistance, as well as excellent acid resistance.

In the present disclosure, "urea water resistance" refers to the property of a formed article being less susceptible to changes in volume and mass even when in contact with urea water. Urea includes urea and polyurea. For example, urea may be urea water.

In the present disclosure, "ammonia water resistance" refers to the property of a formed article being less susceptible to changes in volume and mass even when in contact with ammonia water. Ammonia includes ammonia, ammonium hydroxide and ammonium alkoxide. For example, ammonia may be in gaseous or liquid form. In some embodiments, ammonia is ammonia water.

In the present disclosure, "acid resistance" refers to the property of a formed article being less susceptible to changes in volume and mass even when in contact with an acid such as acetic acid.

### (Fluoroelastomer)

The crosslinkable composition of the present disclosure contains a fluoroelastomer. The fluoroelastomer in the present disclosure, is an amorphous fluoropolymer. The term "amorphous" means that a fluoropolymer has a melting peak (ΔH) of 4.5 J/g or lower as determined by differential scanning calorimetry (DSC) (temperature-increasing rate: 20°C/min) or differential thermal analysis (DTA) (temperature-increasing rate: 20°C/min). The fluoroelastomer exhibits elastomeric characteristics by being crosslinked. Elastomeric characteristics mean such characteristics that the polymer can be stretched, and retain its original length when the force required to stretch the polymer is no longer applied.

The fluoroelastomer may be a partially fluorinated elastomer or a perfluoroelastomer.

The partially fluorinated elastomer in the present disclosure, means a fluoropolymer containing a fluoromonomer unit, having a perfluoromonomer unit content of less than 90 mol% based on all polymerized units, having a glass transition temperature of 20°C or lower, and having a melting peak (ΔH) of 4.5 J/g or lower.

The perfluoroelastomer (perfluororubber) in the present disclosure, means a fluoropolymer having a perfluoromonomer unit content of 90 mol% or more, preferably 91 mol% or more based on all polymerized units, having a glass transition temperature of 20°C or lower, having a melting peak (ΔH) of 4.5 J/g or lower, and having a fluorine atom concentration in the fluoropolymer of 71 mass% or more, preferably 71.5 mass% or more. The fluorine atom concentration in the fluoropolymer in the present disclosure, is the concentration (mass%) of the fluorine atoms contained in the fluoropolymer calculated based on the type and content of each monomer constituting the fluoropolymer.

The perfluoromonomer in the present disclosure, means a monomer free from a carbon-hydrogen bond in the molecule. The perfluoromonomer may be a monomer containing carbon atoms and fluorine atoms in which some of the fluorine atoms bonded to any of the carbon atoms are replaced by chlorine atoms, and may be a monomer containing a nitrogen atom, an oxygen atom, a sulfur atom, a phosphorus atom, a boron atom, or a silicon atom in addition to the carbon atoms. The perfluoromonomer is preferably a monomer in which all hydrogen atoms are replaced by fluorine atoms. The perfluoromonomer does not encompass a monomer that provides a crosslinking site.

The monomer that provides a crosslinking site is a monomer (cure-site monomer) having a crosslinkable group that provides the fluoropolymer with a crosslinking site for forming a crosslink with the cross-linking agent.

The fluoroelastomer used in the present disclosure is not limited, and examples thereof include a peroxide-crosslinkable fluoroelastomer and a polyol-crosslinkable fluoroelastomer. For example, the fluoroelastomer may also be a fluoroelastomer that can be crosslinked using pyridinium-type salts as disclosed in Japanese Translation of PCT International Application Publication No. 2018-514627.

The polyol-crosslinkable fluoroelastomer is a fluoroelastomer having a polyol-crosslinkable site. The polyol-crosslinkable fluoroelastomer is preferably a polyol-crosslinkable partially fluorinated elastomer. The polyol-crosslinkable fluoroelastomer is not limited and examples thereof include vinylidene fluoride (VdF)-based fluoroelastomers.

The fluoroelastomer is preferably a peroxide-crosslinkable fluoroelastomer, as it allows to obtain a formed article with even better urea water resistance, ammonia water resistance, and acid resistance. The peroxide-crosslinkable fluoroelastomer is not limited, and may be a fluoroelastomer having a peroxide-crosslinkable site. The peroxide-crosslinkable site is not limited, and examples thereof include the iodine atoms, bromine atoms, and CN groups of the fluoroelastomer; and the unsaturated carbon-carbon bonds present on the main or side chains of the fluoroelastomer.

When the fluoroelastomer contains iodine atoms, the iodine content is preferably 0.001 to 10 mass%, more preferably 0.01 mass% or more, preferably 0.1 mass% or more, and more preferably 5 mass% or less.

The fluoroelastomer may be a partially fluorinated elastomer or a perfluoroelastomer. The fluoroelastomer is preferably a partially fluorinated elastomer, and more preferably a peroxide-crosslinkable partially fluorinated elastomer, as it allows to obtain a formed article with even better urea water resistance, ammonia water resistance, and acid resistance, and is also advantageous in terms of cost. The monomer compositions of the fluoroelastomers will be described in detail below, but they are suitable as monomer compositions of peroxide-crosslinkable and polyol-crosslinkable fluoroelastomers, and particularly suitable as monomer compositions of peroxide-crosslinkable fluoroelastomers.

It is preferable that the partially fluorinated elastomer contains a monomer unit derived from at least one monomer selected from the group consisting of, for example, tetrafluoroethylene (TFE), vinylidene fluoride (VdF), and a perfluoroethylenically unsaturated compound (such as hexafluoropropylene (HFP) or perfluoro(alkyl vinyl ether) (PAVE)) represented by the general formula: CF₂=CF-Rf^{a}, wherein Rf^{a} is -CF₃ or -ORf^{b} (where Rf^{b} is a perfluoroalkyl group having 1 to 5 carbon atoms). Of these, the partially fluorinated elastomer preferably contains VdF units or TFE units.

Examples of the partially fluorinated elastomer include vinylidene fluoride (VdF)-based fluoroelastomers, tetrafluoroethylene (TFE)/propylene (Pr)-based fluoroelastomers, tetrafluoroethylene (TFE)/propylene/vinylidene fluoride (VdF)-based fluoroelastomers, ethylene/hexafluoropropylene (HFP)-based fluoroelastomers, ethylene/hexafluoropropylene (HFP)/vinylidene fluoride (VdF)-based fluoroelastomers, and ethylene/hexafluoropropylene (HFP)/tetrafluoroethylene (TFE)-based fluoroelastomers. Of these, the partially fluorinated elastomer is preferably at least one selected from the group consisting of vinylidene fluoride-based fluoroelastomers and tetrafluoroethylene/propylene-based fluoroelastomers, as it allows to obtain a formed article having even better urea water resistance, ammonia water resistance, and acid resistance.

The fluoroelastomer is preferably at least one selected from the group consisting of vinylidene fluoride-based fluoroelastomers, tetrafluoroethylene/propylene-based fluoroelastomers, and perfluoroelastomers, and more preferably at least one selected from the group consisting of vinylidene fluoride-based fluoroelastomers and tetrafluoroethylene/propylene-based fluoroelastomers, as it allows to obtain a formed article with even better urea water resistance, ammonia water resistance, and acid resistance.

The vinylidene fluoride-based fluoroelastomer is preferably a copolymer consisting of 45 to 85 mol% vinylidene fluoride and 55 to 15 mol% of at least one further monomer copolymerizable with vinylidene fluoride, and more preferably a copolymer consisting of 50 to 80 mol% vinylidene fluoride and 50 to 20 mol% of at least one further monomer copolymerizable with vinylidene fluoride.

Examples of the at least one further monomer copolymerizable with vinylidene fluoride include monomers such as tetrafluoroethylene (TFE), hexafluoropropylene (HFP), fluoroalkyl vinyl ethers, chlorotrifluoroethylene (CTFE), trifluoroethylene, trifluoropropylene, pentafluoropropylene, trifluorobutene, tetrafluoroisobutene, hexafluoroisobutene, vinyl fluoride, a fluoromonomer represented by the general formula (100): CHX¹⁰¹=CX¹⁰²Rf¹⁰¹ (wherein one of X¹⁰¹ and X¹⁰² is H and the other is F, and Rf¹⁰¹ is a linear or branched fluoroalkyl group having 1 to 12 carbon atoms), a fluoromonomer represented by the general formula (170): CH₂=CH-(CF₂)ₙ-X¹⁷¹ (wherein X¹⁷¹ is H or F, and n is an integer of 3 to 10), and a monomer that provides a crosslinking site; and non-fluorinated monomers such as ethylene, propylene, and alkyl vinyl ethers. These may be used alone or in any combination thereof.

The fluoroalkyl vinyl ether is preferably perfluoro(methyl vinyl ether) or perfluoro(propyl vinyl ether), and more preferably perfluoro(methyl vinyl ether). These can be used singly or in any combination.

The fluoromonomer represented by the general formula (100) is preferably 2,3,3,3-tetrafluoropropylene or 1,3,3,3-tetrafluoropropylene, and more preferably 2,3,3,3-tetrafluoropropylene.

Of these, the at least one further monomer copolymerizable with vinylidene fluoride is preferably at least one selected from the group consisting of TFE, HFP, fluoroalkyl vinyl ether, CTFE, and the fluoromonomers represented by the general formula (100), and is more preferably at least one selected from the group consisting of TFE, HFP, fluoroalkyl vinyl ether, and 2,3,3,3-tetrafluoropropylene.

Specific examples of the vinylidene fluoride-based fluoroelastomers include VdF/HFP-based rubber, VdF/HFP/TFE-based rubber, VdF/CTFE-based rubber, VdF/CTFE/TFE-based rubber, rubber based on VDF and a fluoromonomer represented by the general formula (100), rubber based on VDF, a fluoromonomer represented by the general formula (100), and TFE, rubber based on VDF and perfluoro(methyl vinyl ether) (PMVE), VDF/PMVE/TFE-based rubber, and VDF/PMVE/TFE/HFP-based rubber. Of these, at least one copolymer selected from the group consisting of VdF/HFP-based elastomers, VdF/HFP/TFE-based elastomers, and VdF/2,3,3,3-tetrafluoropropylene-based elastomers.

The VdF/HFP-based elastomer has a VdF/HFP molar ratio of preferably 45 to 85/55 to 15, more preferably 50 to 80/50 to 20, and still more preferably 60 to 80/40 to 20.

The VdF/HFP/TFE-based elastomer has a VdF/HFP/TFE molar ratio of preferably 40 to 80/10 to 35/10 to 35.

The VdF/2,3,3,3-tetrafluoropropylene-based elastomer has a VdF/2,3,3,3-tetrafluoropropylene molar ratio of preferably 45 to 85/55 to 15, more preferably 50 to 80/50 to 20, and still more preferably 60 to 80/40 to 20.

The tetrafluoroethylene/propylene-based fluoroelastomer is preferably a copolymer containing 45 to 70 mol% of tetrafluoroethylene, 55 to 30 mol% of propylene, and 0 to 5 mol% of a fluoromonomer that provides a crosslinking site.

The perfluoroelastomer is preferably at least one selected from the group consisting of perfluoroelastomers containing TFE, such as a copolymer containing TFE and a fluoromonomer represented by the general formula (11), (12), or (13) and a copolymer containing TFE, a fluoromonomer represented by the general formula (11), (12), or (13), and a monomer that provides a crosslinking site.

A fluoromonomer represented by the general formula (11):

CF₂=CF-ORf¹¹¹

wherein Rf¹¹¹ represents a perfluoroalkyl group having 1 to 10 carbon atoms, is preferred. Rf¹¹¹ is preferably a perfluoroalkyl group having 1 to 5 carbon atoms.

A fluoromonomer represented by the general formula (12):

CF₂=CFOCF₂ORf¹²¹

wherein Rf¹²¹ is a linear or branched perfluoroalkyl group having 1 to 6 carbon atoms, a cyclic perfluoroalkyl group having 5 to 6 carbon atoms, or a linear or branched perfluorooxyalkyl group having 2 to 6 carbon atoms and containing 1 to 3 oxygen atoms

A fluoromonomer represented by the general formula (13):

CF₂=CFO(CF₂CF(Y¹³¹)O)ₘ(CF₂)ₙF

wherein Y¹³¹ represents a fluorine atom or a trifluoromethyl group; m is an integer of 1 to 4; and n is an integer of 1 to 4

The fluoromonomer represented by the general formula (11) is preferably at least one selected from the group consisting of perfluoro(methyl vinyl ether), perfluoro(ethyl vinyl ether), and perfluoro(propyl vinyl ether), and is more preferably at least one selected from the group consisting of perfluoro(methyl vinyl ether) and perfluoro(propyl vinyl ether).

The fluoromonomer represented by the general formula (12) is preferably at least one selected from the group consisting of CF₂=CFOCF₂OCF₃, CF₂=CFOCF₂OCF₂CF₃, and CF₂=CFOCF₂OCF₂CF₂OCF₃.

The fluoromonomer represented by the general formula (13) is preferably at least one selected from the group consisting of CF₂=CFOCF₂CF(CF₃)O(CF₂)₃F, CF₂=CFO(CF₂CF(CF₃)O)₂(CF₂)₃F, and CF₂=CFO(CF₂CF(CF₃)O)₂(CF₂)₂F.

The composition of the TFE/PMVE copolymer is preferably 45 to 90/10 to 55 (mol%), more preferably 55 to 80/20 to 45, and further preferably 55 to 70/30 to 45.

The composition of the copolymer of TFE/PMVE/monomer that provides a crosslinking site is preferably 45 to 89.9/10 to 54.9/0.01 to 4 (mol%), more preferably 55 to 77.9/20 to 49.9/0.1 to 3.5, and further preferably 55 to 69.8/30 to 44.8/0.2 to 3.

The composition of the copolymer of TFE and a fluoromonomer represented by the general formula (11), (12), or (13) having 4 to 12 carbon atoms is preferably 50 to 90/10 to 50 (mol%), more preferably 60 to 88/12 to 40, and still more preferably 65 to 85/15 to 35.

The composition of the copolymer of TFE, a fluoromonomer represented by the general formula (11), (12), or (13) having 4 to 12 carbon atoms, and a monomer that provides a crosslinking site is preferably 50 to 89.9/10 to 49.9/0.01 to 4 (mol%), more preferably 60 to 87.9/12 to 39.9/0.1 to **3.5,** and still more preferably 65 to 84.8/15 to 34.8/0.2 to **3.**

When these copolymers have compositional features outside these ranges, the properties as a rubber elastic body are lost, and the properties tend to be close to those of a resin.

The perfluoroelastomer is preferably at least one selected from the group consisting of copolymers of TFE, a fluoromonomer represented by the general formula (13), and a fluoromonomer that provides a crosslinking site, copolymers of TFE and a perfluorovinyl ether represented by the general formula (13), copolymers of TFE and a fluoromonomer represented by the general formula (11), and copolymers of TFE, a fluoromonomer represented by the general formula (11), and a monomer that provides a crosslinking site.

Examples of the perfluoroelastomer further include the perfluoroelastomers disclosed in documents such as International Publication No. WO97/24381, Japanese Patent Publication No. 61-57324, Japanese Patent Publication No. 04-8118, and Japanese Patent Publication No. 05-13961.

The fluoroelastomer also preferably consists of a copolymer containing polymerized units derived from monomers that provide a crosslinking site. Examples of monomers providing a crosslinking site include iodine-containing monomers such as perfluoro(6,6-dihydro-6-iodo-3-oxa-1-hexene) and perfluoro(5-iodo-3-oxa-1-pentene) as described in Japanese Patent Publication No. 05-63482 and Japanese Patent Laid-Open No. 07-316234, bromine-containing monomers as described in Japanese Translation of PCT International Application Publication No. 1992-505341, cyano group-containing monomers, carboxyl group-containing monomers and alkoxycarbonyl group-containing monomers as described in Japanese Translation of PCT International Application Publication No. 1992-505345 and Japanese Translation of PCT International Application Publication No. 1993-500070.

In some embodiments, the fluoroelastomer is obtained by using a chain transfer agent during polymerization. The above chain transfer agent to be used may be a bromine compound or an iodine compound. Examples of a polymerization method performed using a bromine compound or an iodine compound include a method in which emulsion polymerization is carried out in an aqueous medium under pressure in the presence of the bromine compound or the iodine compound in a substantially oxygen-free state (iodine transfer polymerization method). Representative examples of the bromine compound or iodine compound used include a compound represented by General formula:

R²IₓBr_{y}

wherein x and y are each independently an integer of 0 to 2 and satisfy 1 ≤ x+y ≤ 2, and R² is a saturated or unsaturated fluorohydrocarbon group or chlorofluorohydrocarbon group having 1 to 16 carbon atoms, or a hydrocarbon group having 1 to 3 carbon atoms, and may contain an oxygen atom. By using a bromine compound or an iodine compound, iodine or bromine is introduced into the polymer to function as a cross-linking point.

The fluorine content of the fluoroelastomer is preferably 55 to 73 mass%, more preferably 61 mass% or more, still more preferably 63 mass% or more, further still more preferably 65 mass% or more, particularly preferably 67 mass% or more, most preferably 69 mass% or more, and more preferably less than 71 mass%. The fluorine content of the fluoroelastomer can be determined by calculation from the compositional feature of the fluoroelastomer measured by ¹⁹F-NMR.

The Mooney viscosity at 121°C (ML 1+10 (121°C)) of the fluoroelastomer is preferably 2 or more, more preferably 5 or more, and still more preferably 10 or more. It is preferably 200 or lower, more preferably 120 or lower, still more preferably 100 or lower, and particularly preferably 80 or lower. The Mooney viscosity is a value measured according to ASTM D1646-15 and JIS K6300-1:2013.

### (Additive)

The crosslinkable composition of the present disclosure contains at least one additive selected from the group consisting of aluminum silicate, magnesium silicate, aluminum oxide, zirconium oxide, and magnesium aluminometasilicate.

The additive is preferably at least one selected from the group consisting of aluminum silicate, magnesium silicate, zirconium oxide, and aluminum oxide, more preferably at least one selected from the group consisting of aluminum silicate and aluminum oxide, and still more preferably aluminum oxide, as it allows to obtain a formed article with even better urea water resistance, ammonia water resistance, and acid resistance.

Aluminum silicate may be synthetic aluminum silicate or natural aluminum silicate. Examples of the aluminum silicate include compounds represented by, for example, the following formula:

Al₂O₃·9SiO₂·mH₂O

wherein m ≥ 0.

Magnesium silicate may be synthetic magnesium silicate or natural magnesium silicate. Examples of the magnesium silicate include compounds represented by, for example, the following formula:

2MgO·6SiO₂·mH₂O

wherein m ≥ 0.

Aluminum oxide (alumina, Al₂O₃) exists in a variety of crystalline forms and shapes, but any crystalline form and shape of aluminum oxide may be used in the present disclosure. The aluminum oxide may be, for example, α, β, γ, δ, ζ, η, θ, κ, χ, ρ alumina, or amorphous alumina. However, of these, using at least one selected from α and θ alumina allows to obtain a formed article with even better urea water resistance, ammonia water resistance, and acid resistance. Of these, the aluminum oxide is more preferably θ alumina. The shape of the aluminum oxide is not limited. The aluminum oxide may be, for example, plate-shaped alumina, polyhedral alumina, house-of-cards alumina or granular alumina. Furthermore, the aluminum oxide used may be calcined alumina or fused alumina.

The crosslinkable composition containing at least one selected from the group consisting of magnesium aluminometasilicate and zirconium oxide as an additive is a novel crosslinkable composition. The present disclosure also relates to a crosslinkable composition containing a fluoroelastomer and an additive, wherein the additive is at least one selected from the group consisting of magnesium aluminometasilicate and zirconium oxide.

In the crosslinkable composition of the present disclosure, the content of the additive is preferably 0.5 to 10 parts by mass, more preferably 1.0 part by mass or more, more preferably 8 parts by mass or less, still more preferably 6 parts by mass or less, and particularly preferably 4 parts by mass or less based on 100 parts by mass of the fluoroelastomer, as it allows to obtain a formed article with even better urea water resistance, ammonia water resistance, and acid resistance.

### (Cross-linking agent)

The crosslinkable composition of the present disclosure preferably further contains a cross-linking agent. Examples of the cross-linking agent include cross-linking agents commonly used in polyol, polyamine, and peroxide cross-linking. The cross-linking agent is preferably at least one selected from the group consisting of polyhydroxy compounds, polyamine compounds, and organic peroxides, and more preferably an organic peroxide. If emphasis is placed on the acid resistance of the member, a peroxide cross-linking is suitable. However, if forming a laminate or composite part by vulcanizing and bonding a crosslinked fluoroelastomer to other materials, and sufficient vulcanization and bonding is difficult to achieve with peroxide cross-linking, it may be required to achieve both acid resistance and adhesion by selecting polyol cross-linking.

When the crosslinkable composition of the present disclosure contains a polyol-crosslinkable fluoroelastomer, it preferably contains a polyhydroxy compound as a cross-linking agent. When the crosslinkable composition of the present disclosure contains a peroxide-crosslinkable fluoroelastomer, it preferably contains an organic peroxide as a cross-linking agent. When using a fluoroelastomer that can be crosslinked using pyridinium-type salts as disclosed in Japanese Translation of PCT International Application Publication No. 2018-514627, pyridinium salts can be used as a cross-linking agent. When the fluoroelastomer is a fluoroelastomer that can be crosslinked using curing agents containing a terminal olefin with at least one olefinic hydrogen as disclosed in Japanese Translation of PCT International Application Publication No. 2017-538023, terminal olefins with at least one olefinic hydrogen can be used as a cross-linking agent. When the fluoroelastomer is a fluoroelastomer that can be crosslinked using phthalonitrile compounds as disclosed in International Publication No. WO2020-245683, phthalonitrile compounds can be used as a cross-linking agent.

The crosslinkable composition of the present disclosure may also contain a crosslinking accelerator, a basic compound, a polyfunctional cross-linking aid, and the like.

A suitable polyhydroxy compound may be a polyhydroxy aromatic compound in terms of excellent heat resistance. Examples of the polyhydroxy aromatic compound include, but are not limited to, 2,2-bis(4-hydroxyphenyl)propane (hereinafter referred to as bisphenol A), 2,2-bis(4-hydroxyphenyl)perfluoropropane (hereinafter referred to as bisphenol AF), resorcin, 1,3-dihydroxybenzene, 1,7-dihydroxynaphthalene, 2,7-dihydroxynaphthalene, 2,6-dihydroxynaphthalene, 1,6-dihydroxynaphthalene, 4,4'-dihydroxydiphenyl, 4,4'-dihydroxystilbene, 2,6-dihydroxyanthracene, hydroquinone, catechol, 2,2-bis(4-hydroxyphenyl)butane (hereinafter referred to as bisphenol B), 4,4-bis(4-hydroxyphenyl)valeric acid, 2,2-bis(4-hydroxyphenyl)tetrafluorodichloropropane, 4,4'-dihydroxydiphenyl sulfone, 4,4'-dihydroxydiphenylketone, tri(4-hydroxyphenyl)methane, 3,3',5,5'-tetrachlorobisphenol A, and 3,3',5,5'-tetrabromobisphenol A.

The content of polyhydroxy compound is preferably 0.05 to 10 parts by mass and more preferably 0.5 to 5 parts by mass based on 100 parts by mass of the fluoroelastomer.

A cross-linking agent such as a polyhydroxy compound may be used by mixing with other compounds. Examples of the mixture containing a cross-linking agent include a solid solution of a cross-linking agent and a crosslinking accelerator, and a mixture of a cross-linking agent and a compound capable of dissolving the cross-linking agent. The solid solution is preferably a solid solution of a crosslinking agent and a quaternary phosphonium salt. The quaternary phosphonium salt is preferably benzyltriphenylphosphonium chloride.

When the cross-linking agent is a polyhydroxy compound, the crosslinkable composition of the present disclosure preferably contains a crosslinking accelerator. The crosslinking accelerator promotes formation of an intramolecular double bond in the dehydrofluorination reaction of the polymer main chain and addition of a polyhydroxy compound to the formed double bond.

Examples of the crosslinking accelerator include onium compounds, and among onium compounds, the crosslinking accelerator is preferably at least one selected from the group consisting of ammonium compounds such as a quaternary ammonium salt, phosphonium compounds such as a quaternary phosphonium salt, oxonium compounds, sulfonium compounds, cyclic amines, and monofunctional amine compounds, and more preferably at least one selected from the group consisting of quaternary ammonium salts and quaternary phosphonium salts.

Examples of the quaternary ammonium salt include, but are not limited to, 8-methyl-1,8-diazabicyclo[5.4.0]-7-undecenium chloride, 8-methyl-1,8-diazabicyclo[5.4.0]-7-undecenium iodide, 8-methyl-1,8-diazabicyclo[5.4.0] -7-undecenium hydroxide, 8-methyl-1,8-diazabicyclo[5.4.0]-7-undecenium methyl sulfate, 8-ethyl-1,8-diazabicyclo[5.4.0]-7-undecenium bromide, 8-propyl-1,8-diazabicyclo[5.4.0]-7-undecenium bromide, 8-dodecyl-1,8-diazabicyclo[5.4.0]-7-undecenium chloride, 8-dodecyl-1,8-diazabicyclo[5,4,0]-7-undecenium hydroxide, 8-eicosyl-1,8-diazabicyclo[5.4.0]-7-undecenium chloride, 8-tetracosyl-1,8-diazabicyclo[5.4.0]-7-undecenium chloride, 8-benzyl-1,8-diazabicyclo[5.4.0]-7-undecenium chloride (hereinafter referred to as DBU-B), 8-benzyl-1,8-diazabicyclo[5.4.0]-7-undecenium hydroxide, 8-phenethyl-1,8-diazabicyclo[5.4.0]-7-undecenium chloride, and 8-(3-phenylpropyl)-1,8-diazabicyclo[5.4.0]-7-undecenium chloride. Of these, DBU-B is preferred in terms of excellent crosslinkability and various properties.

Examples of the quaternary phosphonium salt include, but are not limited to, tetrabutylphosphonium chloride, benzyltriphenylphosphonium chloride (hereinafter referred to as BTPPC), benzyltrimethylphosphonium chloride, benzyltributylphosphonium chloride, tributylallylphosphonium chloride, tributyl-2-methoxypropylphosphonium chloride, and benzylphenyl(dimethylamino)phosphonium chloride, and among these, benzyltriphenylphosphonium chloride (BTPPC) is preferable in terms of excellent crosslinkability and various properties.

When the cross-linking agent is a polyhydroxy compound, a vulcanization accelerator for fluoroelastomers containing bisphenol AF as a cross-linking agent, as disclosed in Japanese Patent Laid-Open No. 11-147891, or the adduct of a polyhydroxy compound with a quaternary phosphonium salt containing a polyhydroxy compound as a cross-linking agent, as described in Japanese Patent Laid-Open No. 2010-150563, can also be used. When these compounds (mixtures) are used as cross-linking agents and crosslinking accelerators, the content (parts by mass) of the above cross-linking agent is the value obtained by subtracting the content of the crosslinking accelerator in the compound from the content of the compound per 100 parts by mass of the fluoroelastomer.

The content of crosslinking accelerator is not limited and is preferably 0.05 to 5 parts by mass and more preferably 0.5 to 1 part by mass based on 100 parts by mass of the fluoroelastomer.

When a vulcanization accelerator for fluoroelastomers as disclosed in Japanese Patent Laid-Open No. 11-147891, or the adduct of a polyhydroxy compound with a quaternary phosphonium salt as described in Japanese Patent Laid-Open No. 2010-150563, is used as a cross-linking agent and crosslinking accelerator, the content of the above cross-linking agent is the value obtained by subtracting the content of the cross-linking agent in the compound from the content of these compounds per 100 parts by mass of the fluoroelastomer.

Examples of the pyridinium salt include the pyridinium salts described in Japanese Translation of PCT International Application Publication No. 2018-514627. As a suitable content of pyridinium salts, the content described in Japanese Translation of PCT International Application Publication No. 2018-514627 can also be applied to the crosslinkable composition of the present disclosure.

When the cross-linking agent is a pyridinium salt, the crosslinkable composition of the present disclosure preferably contains a basic compound. Examples of the basic compound include the basic compounds described in Japanese Translation of PCT International Application Publication No. 2018-514627. As a suitable content of basic compound, the content described in Japanese Translation of PCT International Application Publication No. 2018-514627 can also be applied to the crosslinkable composition of the present disclosure.

The organic peroxide is not limited as long as it is a cross-linking agent normally used for peroxide cross-linking, and in general, those that readily produce peroxy radicals in the presence of heat and a redox system are suitable. Specific examples include 1,1-bis(t-butylperoxy)-3,5,5-trimethylcyclohexane, 2,5-dimethylhexane-2,5-dihydroperoxide, di-t-butyl peroxide, t-butyl cumyl peroxide, dicumyl peroxide, α,α'-bis(t-butylperoxy)-p-diisopropylbenzene, 2,5-dimethyl-2,5-bis(t-butylperoxy)hexane, 2,5-dimethyl-2,5-bis(t-butylperoxy)-hexyne-3, benzoyl peroxide, t-butyl peroxybenzene, 2,5-dimethyl-2,5-di(benzoylperoxy)hexane, t-butyl peroxymaleate, t-butyl peroxyisopropyl carbonate, and t-butyl peroxybenzoate. Of these, 2,5-dimethyl-2,5-bis(t-butylperoxy)hexane and 2,5-dimethyl-2,5-bis(t-butylperoxy)-hexyne-3 are preferred.

The content of organic peroxide is preferably 0.05 to 10 parts by mass and more preferably 1.0 to 5 parts by mass based on 100 parts by mass of the fluoroelastomer.

When the cross-linking agent is an organic peroxide, the crosslinkable composition of the present disclosure preferably contains a polyfunctional cross-linking aid. Examples of the polyfunctional cross-linking aid include triallyl cyanurate, trimethallyl isocyanurate, triallyl isocyanurate (TAIC), triacrylformal, triallyl trimellitate, N,N'-m-phenylene bismaleimide, dipropagil terephthalate, diallyl phthalate, tetraallyl terephthalate amide, triallyl phosphate, bismaleimide, fluorinated triallyl isocyanurate (1,3,5-tris(2,3,3-trifluoro-2-propenyl)-1,3,5-triazine-2,4,6-trione), tris(diallylamine)-S-triazine, triallyl phosphite, N,N-diallylacrylamide, 1,6-divinyldodecafluorohexane, hexaallyl phosphoramide, N,N,N',N'-tetraallyl phthalamide, N,N,N',N'-tetraallyl malonamide, trivinyl isocyanurate, 2,4,6-trivinylmethyltrisiloxane, tri(5-norbornene-2-methylene) cyanurate, and triallyl phosphite. Of these, triallyl isocyanurate (TAIC) is preferred. When kneading the fluoroelastomer with a polyfunctional cross-linking aid, a polyfunctional cross-linking aid impregnated with an inert inorganic powder or the like may be used.

The content of polyfunctional cross-linking aid is preferably 0.1 to 10 parts by mass and more preferably 0.5 to 5 parts by mass based on 100 parts by mass of the fluoroelastomer.

### (Other Components)

The crosslinkable composition of the present disclosure may or may not contain an acid acceptor, as long as the desired effects exhibited by the crosslinkable composition of the present disclosure are not impaired. Examples of the acid acceptor include metal oxides such as magnesium oxide, calcium oxide, hydrotalcite, bismuth oxide, and zinc oxide; metal hydroxides such as calcium hydroxide; alkali metal silicates disclosed in Japanese Translation of PCT International Application Publication No. 2011-522921 such as sodium metasilicate; and metal salts of weak acids disclosed in Japanese Patent Laid-Open No. 2003-277563. Examples of the metal salt of weak acid include carbonates, benzoates, oxalates, and phosphites of Ca, Sr, Ba, Na, and K.

The acid acceptor is preferably at least one selected from the group consisting of metal oxides, metal hydroxides, alkali metal silicates, hydrotalcite, and weak acid metal salts.

In one embodiment of the crosslinkable composition of the present disclosure, at least one metal compound selected from the group consisting of alkali metals, oxides of alkali metals, hydroxides of alkali metals, salts of alkali metals, alkaline earth metals, oxides of alkaline earth metals, hydroxides of alkaline earth metals, and salts of alkaline earth metals is contained or not, and the content of the metal compound is 0 to 1 part by mass based on 100 parts by mass of the fluoroelastomer. When the crosslinkable composition of the present disclosure is provided with such composition, the acid resistance of the resulting formed article tends to be further improved. The content of the metal compound is preferably 0.5 parts by mass or less, more preferably 0.1 parts by mass or less, and particularly preferably, the metal compound is not contained.

In one embodiment of the crosslinkable composition of the present disclosure, an acid acceptor such as calcium hydroxide, magnesium oxide, or hydrotalcite is contained or not, and the content of the acid acceptor is 0 to 1 part by mass based on 100 parts by mass of the fluoroelastomer. When the crosslinkable composition of the present disclosure is provided with such composition, the acid resistance of the resulting formed article tends to be further improved.

The crosslinkable composition of the present disclosure may contain a variety of additives, such as usual additives to be compounded in a fluoroelastomer crosslinkable composition as required, such as fillers (carbon black, bituminous coal, barium sulfate, diatomaceous earth, calcined clay, talc and the like), processing aids (wax and the like), plasticizers, colorants, stabilizers, tackifiers (cumarone resins, cumarone indene resins and the like), mold release agents, electroconductivity imparting agents, thermal conductivity imparting agents, surface non-adhesive agents, softness imparting agents, heat resistance improvers, flame retarders, foaming agents, and antioxidants as described in International Publication No. WO2012/023485, and may contain one or more common cross-linking agents, crosslinking accelerators different from those described above.

Examples of fillers include metal oxides such as titanium oxide; metal hydroxides such as magnesium hydroxide and aluminum hydroxide; carbonates such as magnesium carbonate, aluminum carbonate, calcium carbonate, and barium carbonate; sulfates such as aluminum sulfate, calcium sulfate, and barium sulfate; metal sulfides such as molybdenum disulfide, iron sulfide, and copper sulfide; diatomaceous earth, asbestos, lithopone (zinc sulfide/barium sulfide), graphite, fluorocarbon, calcium fluoride, coke, quartz fine powder, talc, mica powder, wollastonite, carbon fiber, aramid fiber, various whiskers, glass fiber, organic reinforcing agents, organic fillers, polytetrafluoroethylene, fluorine-containing thermoplastic resin, mica, silica, cerite, and clay.

The content of the filler such as carbon black is not limited, and is preferably 0 to 300 parts by mass, more preferably 1 to 150 parts by mass, even more preferably 2 to 100 parts by mass, and particularly preferably 2 to 75 parts by mass based on 100 parts by mass of the fluoroelastomer.

The content of the processing aid such as wax is preferably 0 to 10 parts by mass and more preferably 0 to 5 parts by mass based on 100 parts by mass of the fluoroelastomer. When a processing aid, a plasticizer, and a mold release agent are used, the mechanical properties and the sealability of the resulting formed article tend to be impaired, and thus the contents thereof need to be adjusted such that the characteristics of the intended formed article to be obtained are acceptable.

The crosslinkable composition of the present disclosure may contain a dialkyl sulfone compound. Examples of the dialkyl sulfone compound include dimethyl sulfone, diethyl sulfone, dibutyl sulfone, methyl ethyl sulfone, diphenyl sulfone, and sulfolane. The content of the dialkyl sulfone compound is preferably 0 to 10 parts by mass, more preferably 0 to 5 parts by mass, and particularly preferably 0 to 3 parts by mass based on 100 parts by mass of the fluoroelastomer. In a case where the crosslinkable composition of the present disclosure contains a dialkylsulfone compound, the lower limit of the content of the dialkylsulfone compound may be, for example, 0.1 parts by mass or more based on 100 parts by mass of the fluoroelastomer.

The crosslinkable composition of the present disclosure is obtained by kneading a fluoroelastomer, an additive, a cross-linking agent, a polyfunctional cross-linking aid, a crosslinking accelerator, a filler, and the like by using a rubber kneading machine generally used. As the rubber kneading machine, there can be used a roll, a kneader, a Banbury mixer, an internal mixer, a twin-screw extruder or the like.

### (Formed article)

A formed article can be obtained by crosslinking the crosslinkable composition of the present disclosure. The crosslinkable composition of the present disclosure is used to obtain a formed article that comes into contact with one or both of ammonia and urea. In addition, the present disclosure also relates to a use of the crosslinkable composition to obtain a formed article in which the changes in volume and mass when in contact with one or both of ammonia and urea are suppressed.

The method for crosslinking the crosslinkable composition of the present disclosure may be a commonly used method such as press crosslinking, steam crosslinking, and oven crosslinking, as well as a crosslinking reaction performed under any conditions, under normal pressure, increased pressure, reduced pressure, and in air. The crosslinking conditions are suitably determined according to the type of a crosslinking agent to be used, heating is usually performed within a temperature range of 150 to 300°C and a range of 1 min to 24 hr. In the case of press and steam crosslinking, it is preferably performed within a temperature range of 150 to 180°C, and the crosslinking time may be at least up to the crosslinking time T90, for example, a range of 1 min to 2 hr. In the case of subsequent (after press or steam crosslinking) oven crosslinking, it is preferably performed within a temperature range of 170°C and 250°C, but not necessarily, and the crosslinking time for oven crosslinking is preferably, for example, 0 to 48 hours.

The formed article may be obtained by forming the crosslinkable composition of the present disclosure. Forming can be performed by a conventionally known method, such as compression molding, injection molding, extrusion forming, and calendering.

Examples of the usage of the formed article include various sealing materials and packings, such as rings, packings, gaskets, diaphragms, oil seals, bearing seals, lip seals, plunger seals, door seals, lip and face seals, gas delivery plate seals, wafer support seals, and barrel seals. The formed article as a sealing material can be used in applications where excellent heat resistance, solvent resistance, chemical resistance, and non-stickiness are required.

Also, the formed article can be used as a tube, a hose, a roll, various types of rubber roll, a flexible joint, a rubber plate, a coating, a belt, a damper, a valve, a valve seat, a valve body, a chemical resistant coating material, a laminating material, a lining material, and the like.

The cross-sectional shape of the ring, packing, and seal may be any of various shapes, and, specifically, it may be, for example, a square shape, an O-shape, or a ferrule, or may be an irregular shape such as a D-shape, an L-shape, a T-shape, a V-shape, an X-shape, or a Y-shape.

One embodiment of the formed article of the present disclosure has a contact surface that comes into contact with one or both of ammonia and urea, and at least the contact surface is composed of a formed article obtained by crosslinking the crosslinkable composition. That is, of the formed articles that come into contact with one or both of ammonia and urea, the formed article obtained from the crosslinkable composition can be used to form at least the contact surface that comes into contact with one or both of ammonia and urea.

The formed article that comes into contact with one or both of ammonia and urea includes formed articles that may come into contact with one or both of ammonia and urea (e.g., containers, hoses, seals, and gaskets), during standard use. Examples of these formed articles include formed articles used in automotive exhaust systems and formed articles used in manufacturing systems that utilize ammonia or urea (e.g., reaction containers, tubes, and sealing materials).

The formed article that comes into contact with one or both of ammonia and urea can be used for the storage, supply, transport, reaction, measurement, and control of ammonia or urea. Examples of formed articles that comes into contact with one or both of ammonia and urea include tanks, hoses, and tank cap seals; supply components such as hoses and tubes; valves; diaphragms; injection components; reaction components (e.g., SCR); reaction containers (i.e., containers in which reactions occur); shaft seals; and connecting components such as O-rings.

The formed article can be particularly suitably used as a part constituting a urea SCR system.

A urea SCR system is an exhaust gas purification system that purifies nitrogen oxides emitted from diesel engines using urea water. The parts constituting the urea SCR system are parts used in urea SCR systems and may be, for example, sealing materials, gasket materials, pipes or tanks.

An example of a urea SCR system using parts constituting urea SCR systems is shown in Figure 1. The urea SCR system 10 includes an exhaust pipe 12 to release the exhaust gases emitted from the engine (not shown) to the outside. The engine exhaust pipe 12 is provided with an oxidation catalyst 11, an SCR catalyst 13, and an oxidation catalyst 14. Urea water 18 is stored in a tank 15 and sprayed into the exhaust pipe 12 by a pump 16 and an injection apparatus 17, where it is converted to ammonia gas by hydrolysis at high temperature. The exhaust gas containing nitrogen oxides emitted from the engine passes through the oxidation catalyst 11 and then to the SCR catalyst 13 together with urea water (ammonia gas), where the nitrogen oxides in the exhaust gas are selectively reduced to be purified. The purified exhaust gas passes through the oxidation catalyst 14 before being discharged to the outside. Immediately after the oxidation catalyst 11, a DPF (diesel particulate filter: not shown) can also be provided to trap particulate matter (PM) in the exhaust gas.

The part constituting a urea SCR system can be suitably used as a part that comes into contact with one or both of ammonia and urea, is less susceptible to changes in volume and mass even when in contact with one or both of ammonia and urea, and is less susceptible to a decrease in tensile strength even when used at high temperatures.

Therefore, the part constituting a urea SCR system can be used as a urea water supply pipe 19 to supply urea water 18 from the tank 15 to the exhaust pipe 12; as a sealing material (not shown) used when connecting the urea water supply pipe 19 to the tank 15, pump 16 or injection apparatus 17; and as a sealing or gasket material for various sensors. It is also suitable to use the part constituting a urea SCR system as a sealing material for joints (not shown) and connect a plurality of pipes to form the urea water supply pipe **19.**

While embodiments have been described above, it will be understood that various changes in form and detail can be made without departing from the gist and scope of the claims.
<1> According to a first aspect of the present disclosure,
   provided is a crosslinkable composition which is used to form a formed article that comes into contact with one or both of an ammonia and a urea, the crosslinkable composition comprising:
   a fluoroelastomer and at least one additive selected from the group consisting of an aluminum silicate, a magnesium silicate, an aluminum oxide, a zirconium oxide, and a magnesium aluminometasilicate.
<2> According to a second aspect of the present disclosure,
   provided is the crosslinkable composition according to the first aspect, wherein the fluoroelastomer is at least one selected from the group consisting of a vinylidene fluoride-based fluoroelastomer and a tetrafluoroethylene/propylene-based fluoroelastomer.
<3> According to a third aspect of the present disclosure,
   provided is the crosslinkable composition according to the first or second aspect, wherein the additive is at least one selected from the group consisting of an aluminum silicate, a magnesium silicate, and an aluminum oxide.
<4> According to a fourth aspect of the present disclosure,
   provided is the crosslinkable composition according to any of the first to the third aspect, wherein the additive is an aluminum oxide.
<5> According to a fifth aspect of the present disclosure,
   provided is the crosslinkable composition according to any of the first to the fourth aspect, wherein the content of the additive is 0.5 to 10 parts by mass based on 100 parts by mass of the fluoroelastomer.
<6> According to a sixth aspect of the present disclosure,
   Provided is the crosslinkable composition according to any of the first to the fifth aspect, further comprising a cross-linking agent.
<7> According to a seventh aspect of the present disclosure,
   provided is the crosslinkable composition according to the sixth aspect, wherein the cross-linking agent is an organic peroxide.
<8> According to an eighth aspect of the present disclosure,
   provided is the crosslinkable composition according to any of the first to the seventh aspect, further comprising a polyfunctional cross-linking aid.
<9> According to a ninth aspect of the present disclosure,
   provided is the crosslinkable composition according to any of the first to the eighth aspect, comprising or not comprising at least one metal compound selected from the group consisting of a alkali metal, an oxide of an alkali metal, a hydroxide of an alkali metal, a salt of an alkali metal, an alkaline earth metal, an oxide of an alkaline earth metal, a hydroxide of an alkaline earth metal, and a salt of an alkaline earth metal, wherein the content of the metal compound is 0 to 1 part by mass based on 100 parts by mass of the fluoroelastomer.
<10> According to a tenth aspect of the present disclosure,
   provided is a formed article that comes into contact with one or both of an ammonia and a urea, wherein the formed article is obtained by crosslinking the crosslinkable composition according to any of the first to the ninth aspect.
<11> According to an eleventh aspect of the present disclosure,
   provided is a formed article, comprising a contact surface that comes into contact with one or both of an ammonia and a urea, wherein at least the contact surface is composed of a formed article obtained by crosslinking the crosslinkable composition according to any of the first to the ninth aspect.
<12> According to a twelfth aspect of the present disclosure,
   provided is the formed article according to the tenth or eleventh aspect, which is a part constituting a urea SCR system.
<13> According to a thirteenth aspect of the present disclosure,
   provided is a crosslinkable composition containing a fluoroelastomer and an additive,
   wherein the additive is at least one selected from the group consisting of a magnesium aluminometasilicate and a zirconium oxide.

### EXAMPLES

Next, embodiments of the present disclosure will now be described by way of Examples, but the present disclosure is not limited only to the Examples.

Various numerical values in the Examples were measured by the following methods.

### <Monomer compositional feature of fluoroelastomer>

Measurements were performed using ¹⁹F-NMR (manufactured by Bruker, AC300P).

### <Content of iodine>

An absorbing solution was prepared by mixing Na₂CO₃ and K₂CO₃ at a 1:1 ratio (weight ratio), and dissolving the resulting mixture in 20 ml of pure water. 12 mg of a sample (fluoroelastomer) was mixed with 5 mg of Na₂SO₃ to prepare a mixture, which was combusted in oxygen in a quartz flask, and the combustion gas generated was introduced into the absorbing solution. After allowing the resulting absorbing solution to stand for 30 minutes, the concentration of iodine ions in the absorbent solution was measured using a Shimadzu 20A ion chromatograph. The content of iodine ions was determined using a calibration curve prepared using KI standard solutions containing 0.5 ppm and 1.0 ppm of iodine ions.

### <Mooney viscosity>

The Mooney viscosity was measured according to ASTM D1646-15 and JIS K6300-1:2013. The measurement temperature was 121°C.

### <Heat of fusion>

Using a differential scanning calorimeter (DSC822e, manufactured by Mettler Toledo, or X-DSC7000, manufactured by Hitachi High-Tech Science Corporation), 10 mg of a sample was heated at 20°C/min to obtain a DSC curve, and from a magnitude of a melting peak (ΔH) appearing in the DSC curve, a heat of fusion was calculated.

### <Crosslinking characteristics (maximum torque (MH), optimum crosslinking time (T90))>

For a crosslinkable composition, in primary crosslinking, a crosslinking curve under the conditions described in Table 1 was determined by using a vulcanization tester (MDR H2030 manufactured by M&K Co., Ltd.), and the maximum torque (MH) and optimum crosslinking time (T90) were determined from the change in the torque.

### <Tensile strength and elongation at break>

A test piece having a dumbbell No. 6 shape was prepared using a crosslinked sheet of 2 mm in thickness. The tensile strength and the elongation at break at 23°C were measured by using the obtained test piece and a tensile tester (manufactured by A&D Co., Ltd., Tensilon RTG-1310) according to JIS K6251:2010 under the condition of 500 mm/min.

### <Hardness>

The hardness (peak value, value after 3 seconds) was measured according to JIS K6253-3:2012 using three stacked sheets of cross-linked sheets of 2 mm in thickness and a type A durometer.

### <Urea water resistance>

A cross-linked sheet of 2 mm in thickness was immersed in urea water (AdBlue (R), manufactured by Shinnihon Kasei Co., Ltd.) at 90°C for 168 hours, and then collected. The specific gravity and mass of the cross-linked sheet before and after immersion were measured, and the rate of volume change and rate of mass change were calculated according to the following formula. The specific gravity was measured using an automatic specific gravity meter DMA-220H (manufactured by Shinko Denshi Co., Ltd.). Rate of volume change (%) = {[(mass of cross-linked sheet after immersion)/(specific gravity of cross-linked sheet after immersion)] - [(mass of cross-linked sheet before immersion)/(specific gravity of cross-linked sheet before immersion)]}/[(mass of cross-linked sheet before immersion)/(specific gravity of cross-linked sheet before immersion)] × 100 Rate of mass change (%) = [(mass of cross-linked sheet after immersion) - (mass of cross-linked sheet before immersion)]/(mass of cross-linked sheet before immersion) × 100

### <Ammonia water resistance>

A cross-linked sheet of 2 mm in thickness was immersed in 10 mass% ammonia water at 40°C for 168 hours, and then collected. The specific gravity and mass of the crosslinked sheet before and after immersion were measured, and the rate of volume change and rate of mass change were calculated according to the following formula. The specific gravity was measured using an automatic specific gravity meter DMA-220H (manufactured by Shinko Denshi Co., Ltd.). Rate of volume change (%) = {[(mass of crosslinked sheet after immersion)/(specific gravity of crosslinked sheet after immersion)] - [(mass of crosslinked sheet before immersion)/(specific gravity of crosslinked sheet before immersion)]}/[(mass of crosslinked sheet before immersion)/(specific gravity of crosslinked sheet before immersion)] × 100 Rate of mass change (%) = [(mass of crosslinked sheet after immersion) - (mass of crosslinked sheet before immersion)]/(mass of crosslinked sheet before immersion) × 100

### <Acid resistance>

A crosslinked sheet of 2 mm in thickness was immersed in a 1N acetic acid aqueous solution at 90°C for 72 hours, and then collected. The specific gravity and mass of the cross-linked sheet before and after immersion were measured, and the rate of volume change and rate of mass change were calculated according to the following formula. The specific gravity was measured using an automatic specific gravity meter DMA-220H (manufactured by Shinko Denshi Co., Ltd.). Rate of volume change (%) = {[(mass of cross-linked sheet after immersion)/(specific gravity of cross-linked sheet after immersion)] - [(mass of cross-linked sheet before immersion)/(specific gravity of cross-linked sheet before immersion)]}/[(mass of cross-linked sheet before immersion)/(specific gravity of cross-linked sheet before immersion)] × 100 Rate of mass change (%) = [(mass of cross-linked sheet after immersion) - (mass of cross-linked sheet before immersion)]/(mass of cross-linked sheet before immersion) × 100

The following materials were used in Examples and Comparative Examples.

### Fluoroelastomer A

Vinylidene fluoride/tetrafluoroethylene/hexafluoropropylene copolymer
Vinylidene fluoride/tetrafluoroethylene/hexafluoropropylene: 50/20/30 (molar ratio)
   Iodine content: 0.25 mass%
   Mooney viscosity (ML 1+10 (121°C)): 25
   Heat of fusion: not observed in second run
Carbon black: MT carbon (N₂SA = 8 m²/g, DBP oil absorption = 43 ml/100 g)
Peroxide: 2,5-Dimethyl-2,5-bis(t-butylperoxy)hexane Polyfunctional cross-linking aid: Triallyl Isocyanurate
Additive-A: Synthetic magnesium silicate (KYOWAAD 600 manufactured by Kyowa Chemical Industry Co. Ltd.)
Additive-B: Synthetic aluminum silicate (KYOWAAD 700 manufactured by Kyowa Chemical Industry Co. Ltd.)
Additive-C: Aluminum oxide (AKP-G07 θ crystals manufactured by Sumitomo Chemical Co., Ltd.)
Additive-D: Magnesium aluminometasilicate (Fuji Chemical Industries Co., Ltd., Neusilin UFL2)
Additive-E: Plate-shaped alumina (AP-05 α crystals manufactured by DIC Corporation)
Additive-F: Zirconium oxide (N-PC manufactured by Nippon Denko Co., Ltd.)
Additive-G: Hydrotalcite (DHT-4A manufactured by Kyowa Chemical Industry Co. Ltd.)
Additive-H: Zinc oxide (purchased from Tokyo Chemical Industry Co., Ltd.)

### Examples 1 to 6 and Comparative Examples 1 to 3

Respective components were compounded according to the formulation in Table 1, and kneaded on an open roll to thereby prepare crosslinkable compositions. The maximum torque (MH) and optimum crosslinking time (T90) of the obtained crosslinkable compositions are shown in Table 1. Next, the crosslinkable compositions were crosslinked by primary crosslinking (press crosslinking) under the conditions described in Table 1 and secondary crosslinking (oven crosslinking) under the conditions described in Table 1 to obtain crosslinked sheet (thickness: 2 mm). The evaluation results of the resulting crosslinked sheets are shown in Table 1.

### [Table 1]

**Table 1**

| | | | Example 1 | Example 2 | Example 3 | Example 4 | Example 5 | Example 6 | Comparative Example 1 | Comparative Example 2 | Comparative Example 3 |
|---|---|---|---|---|---|---|---|---|---|---|---|
| Compounding | Fluoroelastomer A | parts by mass | 100 | 100 | 100 | 100 | 100 | **100** | 100 | 100 | 100 |
| | MT carbon | parts by mass | 20 | 20 | 20 | 20 | 20 | 20 | 20 | 20 | 20 |
| | Polyfunctional cross-linking aid | parts by mass | 4 | 4 | 4 | 4 | 4 | 4 | 4 | 4 | 4 |
| | Peroxide | parts by mass | 1.5 | 1.5 | 1.5 | 1.5 | 1.5 | **1.5** | 1.5 | 1.5 | 1.5 |
| | Additive-A | parts by mass | 3 | | | | | | | | |
| | Additive-B | parts by mass | | 3 | | | | | | | |
| | Additive-C | parts by mass | | | 3 | | | | | | |
| | Additive-D | parts by mass | | | | 3 | | | | | |
| | Additive-E | parts by mass | | | | | 3 | | | | |
| | Additive-F | parts by mass | | | | | | 3 | | | |
| | Additive-G | parts by mass | | | | | | | | 3 | |
| | Additive-H | parts by mass | | | | | | | | | 3 |
| Crosslinking characteristics | Maximum torque | dNm | 30.5 | 28.5 | 30.3 | 30.8 | 29.5 | 26.8 | 28.2 | 30.7 | 26.3 |
| (MDR) | Optimum crosslinking time | min | 2.4 | 3.7 | 2.1 | 2.9 | 3.6 | 2.9 | 3.5 | 2.5 | 2.3 |
| Forming conditions | Primary crosslinking | | 160°C × 15 min | 160°C × 15 min | 160°C × 15 min | 160°C × 15 min | 160°C × 15 min | 160°C × 15 min | 160°C × 15 min | 160°C × 15 min | 160°C × 15 min |
| | Secondary crosslinking | | 180°C × 4 h | 180°C × 4 h | 180°C × 4 h | 180°C × 4 h | 180°C × 4 h | 180°C × 4 h | 180°C × 4 h | 180°C × 4 h | 180°C × 4 h |
| Ordinary-state properties | Tensile strength | MPa | 23.0 | 21.9 | 24.1 | 22.8 | 23.3 | 23.0 | 25.2 | 25.8 | 22.8 |
| | Elongation at break | % | 200 | 220 | 200 | 200 | 220 | 260 | 230 | 220 | 270 |
| | Hardness (peak) | - | 75 | 75 | 74 | 75 | 70 | 73 | **74** | 75 | 72 |
| Urea water resistance | | | | | | | | | | | |
| | Rate of volume change | % | 1 | 0 | 1 | 1 | 3 | 4 | 8 | -2 | 7 |
| | Rate of mass change | % | 2 | 1 | 1 | 1 | 2 | 3 | 6 | 2 | 4 |
| Ammonia water resistance | | | | | | | | | | | |
| | Rate of volume change | % | 2 | 1 | 1 | 4 | 3 | 3 | 4 | 2 | - |
| | Rate of mass change | % | 1 | 1 | 1 | 2 | 2 | 2 | 2 | 1 | - |
| Acid resistance | | | | | | | | | | | |
| | Rate of volume change | % | 8 | 1 | 1 | 6 | 1 | 1 | 1 | 18 | 12 |
| | Rate of mass change | % | 4 | 1 | 1 | 4 | 0 | 1 | 1 | 10 | 7 |

## Claims

1. A crosslinkable composition which is used to form a formed article that comes into contact with one or both of an ammonia and a urea, the crosslinkable composition comprising:
a fluoroelastomer and at least one additive selected from the group consisting of an aluminum silicate, a magnesium silicate, an aluminum oxide, a zirconium oxide, and a magnesium aluminometasilicate.

2. The crosslinkable composition according to claim 1, wherein the fluoroelastomer is at least one selected from the group consisting of a vinylidene fluoride-based fluoroelastomer and a tetrafluoroethylene/propylene-based fluoroelastomer.

3. The crosslinkable composition according to claim 1 or 2, wherein the additive is at least one selected from the group consisting of an aluminum silicate, a magnesium silicate, and an aluminum oxide.

4. The crosslinkable composition according to any one of claims 1 to 3, wherein the additive is an aluminum oxide.

5. The crosslinkable composition according to any one of claims 1 to 4, wherein the content of the additive is 0.5 to 10 parts by mass based on 100 parts by mass of the fluoroelastomer.

6. The crosslinkable composition according to any one of claims 1 to 5, further comprising a cross-linking agent.

7. The crosslinkable composition according to claim 6, wherein the cross-linking agent is an organic peroxide.

8. The crosslinkable composition according to any one of claims 1 to 7, further comprising a polyfunctional cross-linking aid.

9. The crosslinkable composition according to any one of claims 1 to 8, comprising or not comprising at least one metal compound selected from the group consisting of a alkali metal, an oxide of an alkali metal, a hydroxide of an alkali metal, a salt of an alkali metal, an alkaline earth metal, an oxide of an alkaline earth metal, a hydroxide of an alkaline earth metal, and a salt of an alkaline earth metal, wherein the content of the metal compound is 0 to 1 part by mass based on 100 parts by mass of the fluoroelastomer.

10. A formed article that comes into contact with one or both of an ammonia and a urea, wherein the formed article is obtained by crosslinking the crosslinkable composition according to any one of claims 1 to 9.

11. A formed article, comprising a contact surface that comes into contact with one or both of an ammonia and a urea, wherein at least the contact surface is composed of a formed article obtained by crosslinking the crosslinkable composition according to any one of claims 1 to 9.

12. The formed article according to claim 10 or 11, which is a part constituting a urea SCR system.

13. A crosslinkable composition comprising a fluoroelastomer and an additive,
wherein the additive is at least one selected from the group consisting of a magnesium aluminometasilicate and a zirconium oxide.
